# EUROPÄISCHE PATENTSCHRIFT

(11) **EP 2 993 831 B1**
(45) Veröffentlichungstag und Bekanntmachung des Hinweises auf die Patenterteilung: **12.02.2020**
(21) Anmeldenummer: 15181894.5
(22) Anmeldetag: 21.08.2015
(51) Int. Cl.: H04L 12/28

(54) **VERFAHREN ZUR ERMITTLUNG UND ANZEIGE VON ZUBEHÖR UND DIENSTLEISTUNGEN FÜR VERNETZTE HAUSGERÄTE**
METHOD FOR DETERMINING AND DISPLAYING ACCESSORIES AND SERVICES FOR NETWORKED HOUSEHOLD APPLIANCES
PROCÉDÉ DE DÉTERMINATION ET D'AFFICHAGE D'ACCESSOIRES ET DE SERVICES POUR APPAREILS MÉNAGERS EN RÉSEAU

(30) Priorität: 03.09.2014 DE 102014217617
(43) Veröffentlichungstag der Anmeldung: 09.03.2016
(73) Patentinhaber: BSH Hausgeräte GmbH, 81739 München (DE)
(72) Erfinder: Dotz, Boris, 81241 München (DE); Häpp, Claudia, 85591 Vaterstetten (DE); Kober, Christoph, 83624 Otterfing (DE); Seitz, Silke, 80469 München (DE)

(56) Entgegenhaltungen:
- WO-A1-2010/067618
- WO-A2-02/09384
- JP-A- H1 027 089
- US-A1- 2008 010 374
- DIDIER DONSEZ ED - ALIREZA SEYEDI ET AL: "On-Demand Component Deployment in the UPnP Device Architecture", CONSUMER COMMUNICATIONS AND NETWORKING CONFERENCE, 2007. CCNC 2007. 20 07 4TH IEEE, IEEE, PI, 1. Januar 2007 (2007-01-01), Seiten 920-924, XP031087917, ISBN: 978-1-4244-0667-8
- OSGI ALLIANCE: "OSGi Service Platform Service Compendium (Release 4, Version 4.1)", INTERNET CITATION, 1. April 2007 (2007-04-01), Seite Complete, XP007909674, Gefunden im Internet: URL:https://osgi.org/download/r4v41/r4.cor e.pdf [gefunden am 2009-09-03]
- DONG-SUNG KIM ET AL: "Home network systems for networked appliances using power-line communication", INDUSTRIAL ELECTRONICS SOCIETY, 2004. IECON 2004. 30TH ANNUAL CONFEREN CE OF IEEE BUSAN, SOUTH KOREA 2-6 NOV. 2004, PISCATAWAY, NJ, USA,IEEE, Bd. 3, 2. November 2004 (2004-11-02), Seiten 2394-2399, XP010799334, DOI: 10.1109/IECON.2004.1432175 ISBN: 978-0-7803-8730-0
- DVB ORGANIZATION: "TM-MUG0416_mug416_UPnP_Device_Architectur e_Generic_20000710ppt.ppt", DVB, DIGITAL VIDEO BROADCASTING, C/O EBU - 17A ANCIENNE ROUTE - CH-1218 GRAND SACONNEX, GENEVA - SWITZERLAND, 4. April 2014 (2014-04-04), XP017844375,
- HONG JONGYI ET AL: "Context-aware system for proactive personalized service based on context history", EXPERT SYSTEMS WITH APPLICATIONS, vol. 36, no. 4, 1 January 2007 (2007-01-01), pages 7448-7457, XP029191334, ISSN: 0957-4174, DOI: 10.1016/J.ESWA.2008.09.002

## Beschreibung

Die Erfindung betrifft ein Verfahren, mit welchem vernetzte Hausgeräte und damit in Zusammenhang stehende Funktionen bedient und überwacht werden können.

Vernetzte Hausgeräte, die über eine App oder eine Web-basierte Anwendung bedient und überwacht werden können, sind bekannt. Die bisherigen Lösungen setzen dabei auf klassische Interaktionskonzepte bei denen Informationen bzgl. der Hausgeräte, sowie Informationen bzgl. der mit den Hausgeräten assoziierten Funktionen und Dienstleistungen nach Bereichen, Menüs und Untermenüs sortiert werden. Bei diesen Interaktionskonzepten ist typischerweise keine Anpassung der Bedienungsanwendung an den Nutzer möglich.

DIDIER DONSEZ: "On-Demand Component Deployment in the UPnP Device Architecture", CONSUMER COMMUNICATIONS AND NETWORKING CONFERENCE, 2007, ISBN: 978-1-4244-0667-8, Seiten 920-924, offenbart einen Ansatz, um mit Heterogenität in einer Smart-Home-Umgebung umzugehen. Vorgeschlagen werden hausgeräteseitige Adapter, sogenannte Bridglets, und endgeräteseitige Adapter, sogenannte Controllets, sowie eine vermittelnde Service-Trading-Architektur.

OSGI ALLIANCE: "OSGi Service Platform Service Compendium (Release 4, Version 4.1)", 1. April 2007, spezifiziert eine hardwareunabhängige dynamische Softwareplattform, die es erleichtert, Anwendungen und ihre Dienste per Komponentenmodell zu modularisieren und zu verwalten.

DONG-SUNG KIM ET AL: "Home network systems for networked appliances using power-line communication", INDUSTRIAL ELECTRONICS SOCIETY, 2-6 NOV. 2004, Seiten 2394-2399, ISBN: 978-0-7803-8730-0, beschreibt das Design und eine Implementierung eines Heimnetzsystems, das Universal Plug and Play verwendet.

DVB ORGANIZATION : "TMMUG0416_mug416JJPnP_Device_Architecture_ Generic_20000710ppt.ppt", DVB, DIGITAL VIDEO BROADCASTING, C/O EBU - 17A ANCIENNE ROUTE - CH-1218 GRAND SACONNEX, GENEVA - SWITZERLAND, 4. April 2014, XP017844375, beschreibt eine Architektur für UPnP-Geräte.

US 2008/010374 A1 beschäftigt sich mit einem Kontrollpunkt-Gerät in einem UPnP Netzwerk und einem zugehörigen Verfahren.

WO 02/09384 A2 offenbart ein Heimnetzwerk mit einem UPnP Cluster.

Das vorliegende Dokument befasst sich mit der technischen Aufgabe eine intuitive Benutzerinteraktion für die Bedienung von ein oder mehreren vernetzten Hausgeräten zu ermöglichen. Dabei soll es dem Nutzer ermöglicht werden, in einfacher Weise Zusammenhänge zwischen unterschiedlichen Bereichen und Aspekten der Bedienung und des Betriebs der Hausgeräte zu erkennen. Insbesondere soll durch die intuitive Benutzerinteraktion der Nutzen der Hausgeräte für einen Nutzer erhöht werden.

Die Aufgabe wird durch die unabhängigen Ansprüche gelöst. Vorteilhafte Ausführungsformen werden u.a. in den abhängigen Ansprüchen beschrieben.

Gemäß einem Aspekt wird ein Verfahren zur Bedienung eines Hausgeräts mittels eines elektronischen Geräts gemäß Anspruch 1 beschrieben, das über ein Netzwerk mit dem Hausgerät verbunden ist. Das Verfahren umfasst das Ermitteln von historischen Informationen bzgl. des Hausgeräts. Außerdem umfasst das Verfahren das Bestimmen von einem Zubehörartikel und/oder von einer Dienstleistung bzgl. des Hausgeräts auf Basis der historischen Informationen. Desweiteren umfasst das Verfahren das Ausgeben von Informationen bzgl. des Zubehörartikels und/oder der Dienstleistung anhand eines Ausgabemittels des elektronischen Geräts.

Es wird auch ein elektronisches Gerät beschrieben, das eingerichtet ist, ein Hausgerät zu bedienen. Das elektronische Gerät umfasst eine Kommunikationseinheit, die eingerichtet ist, über ein Netzwerk mit dem Hausgerät zu kommunizieren, und ein Ausgabemittel, das eingerichtet ist, eine bildliche Darstellung auszugeben. Desweiteren umfasst das elektronische Gerät einen Prozessor, der eingerichtet ist, historische Informationen bzgl. des Hausgeräts zu ermitteln. Desweiteren ist der Prozessor eingerichtet, auf Basis der historischen Informationen einen Zubehörartikel und/oder eine Dienstleistung bzgl. des Hausgeräts zu bestimmen. Außerdem ist der Prozessor eingerichtet, Informationen bzgl. des Zubehörartikels und/oder bzgl. der Dienstleistung anhand des Ausgabemittels des elektronischen Geräts auszugeben.

Es wird auch ein Software(SW)-Programm beschrieben. Das SW-Programm kann eingerichtet werden, um auf einem Prozessor (z.B. auf einem Prozessor eines elektronischen Geräts) ausgeführt zu werden, und um dadurch das in diesem Dokument beschriebene Verfahren auszuführen.

Es wird auch ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Desweiteren können jegliche Aspekte der in diesem Dokument beschriebenen Verfahren, Vorrichtung und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen
- Figur 1: ein beispielhaftes Netzwerk mit einer Vielzahl von Hausgeräten;
- Figur 2: einen beispielhaften Aufbau eines Seiten-basierten Bedienprogramms;
- Figur 3: einen beispielhaften Aufbau einer bildlichen Darstellung einer Seite eines Bedienprogramms; und
- Figur 4: ein Flussdiagramm eines beispielhaften Verfahrens zur Bedienung eines Hausgeräts.

Wie eingangs dargelegt, befasst sich das vorliegende Dokument mit der effizienten und intuitiven Bedienung von ein oder mehreren vernetzten Hausgeräten. Dabei soll ein Betrieb der ein oder mehreren Hausgeräte ermöglicht werden, durch den der Nutzen für einen Nutzer der ein oder mehreren Hausgeräte erhöht wird.

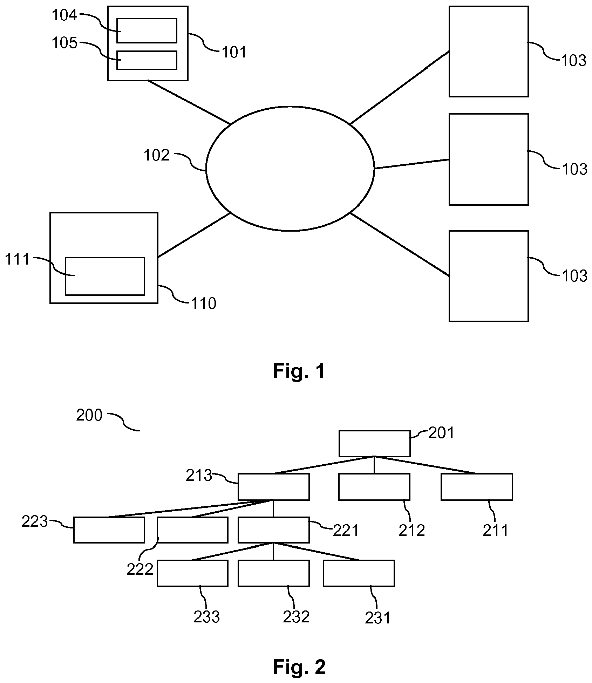

Fig. 1 zeigt eine Vielzahl von Hausgeräten 103 insbesondere Haushaltsgeräten (z.B. ein oder mehrere Herde, insbesondere Backherde, ein oder mehrere Waschmaschinen, ein oder mehrere Trockner, ein oder mehrere Spülmaschinen, etc.) die über ein Netzwerk 102 mit einem elektronischen Gerät 101 verbunden sind. Das Netzwerk 102 kann ein drahtloses und/oder ein drahtgebundenes Netzwerk umfassen. Beispielhafte drahtlose Netzwerke umfassen ein WLAN, ein UMTS und/oder ein LTE Netzwerk. Das elektronische Gerät 101 kann einen Tablet PC, ein Smartphone oder einen Laptop PC umfassen. Das elektronische Gerät 101 umfasst ein Ausgabemittel 104 (z.B. einen Bildschirm), das eingerichtet ist, bildliche Informationen auszugeben. Insbesondere kann das Ausgabemittel 104 eingerichtet sein, eine bildliche Darstellung einer Seite eines Seiten-basierten Bedienprogramms auszugeben. Desweiteren umfasst das elektronische Gerät 101 ein Eingabemittel 105 (z.B. eine physikalische Tastatur oder eine virtuelle Tastatur auf einem berührempflindlichen Bildschirm), das eingerichtet ist, eine Eingabe durch einen Benutzer des elektronischen Geräts 101 zu erfassen. Beispielsweise kann ein _{"}Klick" auf ein Eingabeelement auf einer dargestellten Seite eines Bedienprogramms erfasst werden.

Das elektronische Gerät 101 umfasst einen Prozessor, der eingerichtet ist, ein oder mehrere Softwareprogramme und/oder Instruktionen auszuführen. Insbesondere kann das elektronische Gerät 101 eingerichtet sein, anhand eines von dem Prozessor ausgeführten Bedienprogramms die Vielzahl von Hausgeräten 103 über das Netzwerk 102 zu bedienen und/oder Statusinformationen bzgl. der Vielzahl von Hausgeräten 103 über das Netzwerk 102 zu beziehen. Desweiteren kann das elektronische Gerät 101 eingerichtet sein, mittels des Bedienprogramms auf einen externen Rechner (z.B. einen Server) 110 zuzugreifen. Der Rechner 110 kann eine Speichereinheit 111 umfassen, auf der Informationen bzgl. ein oder mehrerer der Vielzahl von Hausgeräten 103 gespeichert sind. Beispielhafte Informationen sind Bedienungsanleitungen, Rezeptsammlungen, Einträge aus Bedienerforen, etc. Außerdem kann über den externen Rechner 110 ggf. auf eine Hotline und/oder auf einen Service bzgl. der Hausgeräte 103 zugegriffen werden.

Somit kann das in Fig. 1 dargestellte elektronische Gerät 101 dazu verwendet werden, ein oder mehrere der Hausgeräte 103 zu steuern und/oder Statusinformationen bzgl. der ein oder mehreren Hausgeräte 103 zu beziehen. Dazu kann das elektronische Gerät 101 ggf. auf den Rechner 110 (z.B. einen Web-Server) zugreifen, um ein Web-basiertes Bedienprogramm auszuführen. Alternativ oder ergänzend kann das Bedienprogramm (z.B. über eine App) zumindest teilweise auf dem elektronischen Gerät 101 bereitgestellt werden. Wie oben dargelegt, kann das Bedienprogramm Seiten-basiert aufgebaut sein. Beispielsweise kann das Bedienprogramm eine Vielzahl von Seiten (z.B. Web-Seiten) umfassen, die in einer vordefinierten Menüstruktur angeordnet sind.

Fig. 2 zeigt einen beispielhaften Aufbau eines Bedienprogramms 200. Das Bedienprogramm 200 umfasst eine Vielzahl von Seiten 201, 211, 212, 213, 221, 222, 223, 231, 232, 233, die in einer Baumstruktur oder Menüstruktur angeordnet sind. Über eine Startseite 201 können durch Auswahl von entsprechenden Menüpunkten auf der Startseite 201 weitere Seiten 211, 212, 213 erreicht werden, usw. Die Startseite 201 kann einem Nutzer der Hausgeräte 103 beispielsweise die Möglichkeit bieten, auf einzelne Hausgeräte 103 zuzugreifen (z.B. über eine Seite 213). Desweiteren können über andere Seiten 212, 211 mit den Hausgeräten 103 assoziierte Aspekte oder Bereiche (z.B. Kochrezepte, Dienstleistungen, Erfahrungsberichte, etc.) angeboten werden. Auf der Seite 213 für den Zugriff auf einzelne Hausgeräte 103 kann dem Nutzer dann beispielsweise die Möglichkeit angeboten werden, über eine Menüauswahl ein spezifisches Hausgerät 103 der Vielzahl von Hausgeräten 103 (z.B. eine Waschmaschine, einen Trockner, eine Spülmaschine, einen Ofen, etc.) auszuwählen. Die einzelnen Hausgeräte 103 können jeweils mit einer der Seiten 221, 222, 223 assoziiert sein. Beispielsweise kann über die Seite 221 auf einen Ofen 103 zugegriffen werden. Auf einer Geräteseite 221 kann dann wiederum über eine Menüauswahl auf spezifische Aspekte des Ofens 103 zugegriffen werden (z.B. anhand der Seiten 231, 232, 233).

Wie das Beispiel in Fig. 2 verdeutlicht, führt der Menüartige Aufbau des Bedienprogramms 200 dazu, dass ein Nutzer, der sich an einer bestimmten Stelle der Menüstruktur befindet (z.B. auf der Seite 233) nur in sehr aufwändiger Weise zu einer anderen Stelle der Menüstruktur gelangen kann (z.B. zu der Seite 211). Es ist dazu erforderlich, dass sich der Nutzer an der vorgegebenen Menüstruktur entlang hangelt, was sehr zeitaufwändig und unkomfortabel ist. Außerdem setzt diese Navigation innerhalb der Menüstruktur voraus, dass der Nutzer weiß, wo sich bestimmte Aspekte / Seiten innerhalb der Menüstruktur befinden.

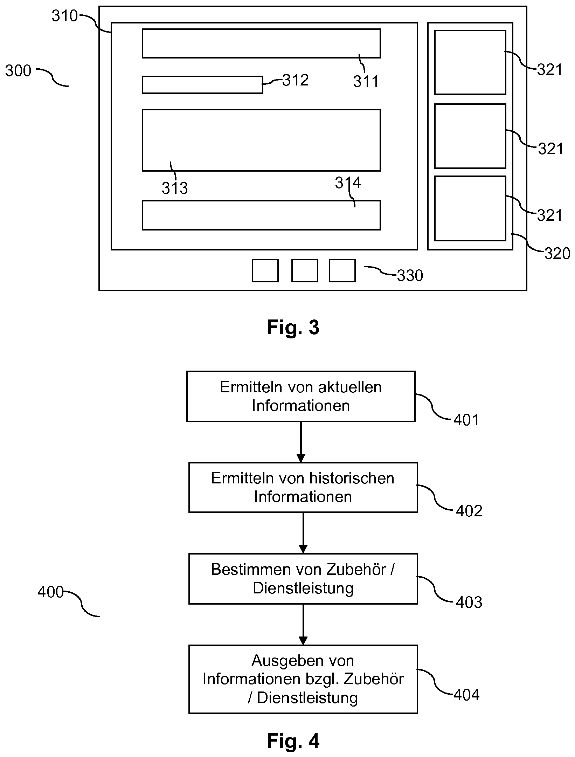

Fig. 3 zeigt einen beispielhaften Aufbau einer erweiterten bildlichen Darstellung 300 einer ersten Seite 233 des Bedienprogramms 200 auf dem Ausgabemittel 104 des elektronischen Geräts 101, durch die es einem Nutzer ermöglicht wird, in effizienter und intuitiver Weise andere Seiten 211 des Bedienprogramms 200 zu erreichen, ohne dabei spezifische Kenntnisse über die Menüstruktur des Bedienprogramms 200 haben zu müssen, und ohne sich dabei durch die gesamte Menüstruktur des Bedienprogramms 200 hangeln zu müssen. Die bildliche Darstellung 300 kann für eine beliebige Seite der Seiten 201, 211, 212, 213, 221, 222, 223, 231, 232, 233 des Bedienprogramms 200 erstellt und ausgegeben werden.

Die in Fig. 3 dargestellte Struktur der bildlichen Darstellung 300 ermöglicht es, dass einem Nutzer für jeden Bedienschritt die passenden ein oder mehreren nächsten Bedienschritte, Funktionen, Zubehörartikel und/oder Dienstleistungen (Services) kontextspezifisch und/oder nutzungsspezifisch angeboten werden, so dass eine einfache Bedienung einer hohen Zahl von Funktionen und Services ohne aufwändiges Einarbeiten durch den Nutzer ermöglicht wird. Außerdem kann so der Nutzen eines Hausgeräts 103 für den Nutzer erhöht werden.

Die beispielhafte bildliche Darstellung 300 umfasst einen Basisbereich 310, in dem eine herkömmliche Seite 231, 232, 233 des Bedienprogramms 200 dargestellt werden kann. Desweiteren kann die Darstellung 300 einen Menübereich 330 umfassen, durch den einzelne übergeordnete Seiten 201, 211, 212, 213 des Bedienprogramms 200 direkt erreicht werden können. Beispielsweise können über den Menübereich 330 die Startseite 201 oder die Seiten 211, 212, 213 der ersten Menüebene des Bedienprogramms 200 erreicht werden. Letztere Seiten 211, 212, 213 können beispielsweise mit den unterschiedlichen Themenbereichen des Bedienprogramms 200 assoziiert sein.

Desweiteren umfasst die bildliche Darstellung 300 einen sogenannten kontextabhängigen Bereich 320 (auch als Toastbereich oder Toastpanel bezeichnet), in dem ein oder mehrere kontextabhängige Interaktionselemente 321 (auch als Toasts bezeichnet) dargestellt werden können. Der Toastbereich 320 kann in Abhängigkeit von der Größe eines Bildschirms 104 des Geräts 101 ständig dargestellt werden, oder ggf. durch eine Wischbewegung auf den Bildschirm 104 geholt werden und wieder von dem Bildschirm 104 "gewischt" werden (insbesondere bei kleineren Bildschirmen 104, wie z.B. bei Smartphones).

Mit anderen Worten, als Ergänzung zu einer Standardnavigation über ein Hauptmenü 211, 212, 213 und über Untermenüs 221, 222, 223, 231, 332, 333 kann eine weitere Klasse von kontextsensitiven Informations- und Interaktionselementen (Toasts) 321 bereitgestellt werden. Die Toasts 321 können Interaktionsmöglichkeiten für Informationen, Funktionen, Zubehörartikel und/oder Services enthalten, die im jeweiligen Nutzungskontext und/oder bei der jeweiligen Nutzungshistorie in dem Bedienprogramm 200 für den Nutzer relevant sein können. Dabei spielt es keine Rolle, welchem Hauptmenü 211, 212, 213 oder welchen Untermenüs 221, 222, 223, 231, 332, 333 die jeweiligen Informationen, Funktionen, Zubehörartikel oder Services angehören. Ggf. kann über das Bedienprogramm 200, d.h. insbesondere über eine Seite des Bedienprogramms 200, als Interaktionsmöglichkeit auch der Kauf eines Zubehörartikels und/oder Services angeboten und ggf. auch abgewickelt werden.

Die Toasts 321 können als kachelartige bildliche Bereiche oder Flächen ausgebildet sein, die sich in einem definierten Toastbereich 320 einer bildlichen Darstellung 300 einer jeden Seite 201, 211, 212, 213, 221, 222, 223, 231, 232, 233 des Bedienprogramms 200 befinden.

Die Auswahl der jeweils angezeigten Toasts 321 kann regelbasiert erfolgen. Diesen Regeln kann ein Expertensystem zu Grunde liegen, das die Informationen über den Nutzungskontext und/oder die Nutzungshistorie der jeweiligen Funktionen und/oder Services (insbesondere der aktuellen Seite 233 des Bedienprogramms 200 im Basisbereich 310) verwendet, um in oder mehrere Toasts 321 auszuwählen.

Alternativ oder ergänzend kann die Auswahl der jeweils angezeigten Toasts 321 von einem Status des bedienten Hausgeräts 103 und/oder von einem Nutzungsprofil des bedienten Hausgeräts 103 abhängen. Mit anderen Worten, es können aktuelle Informationen und/oder historische Informationen bzgl. des bedienten Hausgeräts 103 bei der Auswahl der angezeigten Toasts 321 berücksichtigt werden. Dadurch ist es möglich, Toasts 321 zu ermitteln und anzuzeigen, die eine besonders hohe Relevanz für den Nutzer des Hausgeräts 103 aufweisen, und die so eine besonders effektive Nutzung des Hausgeräts 103 ermöglichen und den Nutzen des Bedienprogramms 200 für einen Nutzer erhöhen.

Der Nutzer kann über die Auswahl eines Toasts 321 direkt auf eine Seite 211 des Bedienprogramms (innerhalb der Menüstruktur) gelangen, zu dem der Inhalt des Toasts 321 gehört. Insbesondere wird dem Nutzer die zu dem ausgewählten Toast 321 gehörende Seite 211 als Basisseite in einem Basisbereich 310 einer neuen bildlichen Darstellung 300 angezeigt. Desweiteren werden dem Nutzer wiederum in einem Toastbereich 320 der neuen bildlichen Darstellung 300 kontextrelevante und/oder nutzungsrelevante Navigationsmöglichkeiten in Form von weiteren Toasts 321 angezeigt. Die Standardinteraktion über die Menüstruktur muss von dem Benutzer somit nur noch für Informationen, Funktionen, Zubehörartikel und/oder Services genutzt werden, die nicht über die Toasts 321 angeboten werden.

Fig. 3 zeigt weiter beispielhafte Elemente einer im Basisbereich 310 dargestellten Seite 233. Wie bereits oben dargelegt, umfasst eine im Basisbereich 310 dargestellte Seite typischerweise eine der Seiten 201, 211, 212, 213, 221, 222, 223, 231, 232, 233 des in Fig. 2 dargestellten Seiten-basierten Bedienprogramms 200. Die im Basisbereich 310 dargestellte Seite 233 kann auch als Basisseite bezeichnet werden. Eine Basisseite 233 kann eine Überschrift 311 umfassen, die in zusammenfassender Weise anzeigt, welche Informationen sich auf der Basisseite 233 befinden und/oder welche Aktionen auf der Basisseite 233 ausgeführt werden können. Desweiteren kann die Basisseite 233 eine Menüliste 312 umfassen, die anzeigt, wie man von der aktuellen Basisseite 233 über die vordefinierte Menüstruktur des Bedienprogramms 200 (siehe Fig. 2) zu anderen Seiten 211 der Menüstruktur navigieren kann. Desweiteren kann die Basisseite 233 einen Informationsbereich oder Textbereich 313 umfassen (z.B. für Status-Informationen bzgl. des Status eines Hausgeräts, oder für Anweisungen eines Rezepts). Außerdem kann die Basisseite 233 Steuerelemente 314 umfassen, die es einem Nutzer ermöglichen, ein oder mehrere Steuerbefehle an ein über die aktuelle Basisseite 233 steuerbares Hausgerät 103 zu senden.

Aus den Informationen einer aktuell angezeigten Basisseite 233 kann ein Kontext ermittelt werden. Mit anderen Worten, die Informationen einer aktuellen angezeigten Basisseite 233 können dazu verwendet werden, einen aktuellen Kontext zu ermitteln. Der Kontext kann z.B. ein oder mehrere der folgenden Komponenten umfassen:
- ein Schlagwort, welches auf der aktuellen angezeigten Basisseite 233 erscheint;
- die Referenznummer einer Fehlermeldung, die auf der aktuellen Basisseite 233 angezeigt wird;
- ein Typ des Hausgeräts 103, mit der die aktuelle Basisseite 233 assoziiert ist; und/oder
- eine Bedienaktion für ein Hausgerät 103, die auf der aktuellen Basisseite ausgeführt werden kann.

Auf Basis des aktuellen Kontexts können dann ein oder mehrere andere Seiten 211 des Bedienprogramms 200 ermittelt werden, die für den aktuellen Kontext relevant sind. Zu diesem Zweck können beispielsweise vordefinierte Regeln und/oder Suchalgorithmen verwendet werden. Für die ein oder mehreren ermittelten Seiten 211 (auch als Kandidatenseiten bezeichnet) kann jeweils ein Relevanzmaß bestimmt werden, und die ein oder mehreren ermittelten Seiten 211 können in Abhängigkeit von dem Relevanzmaß sortiert werden. Das Relevanzmaß kann anzeigen, wie relevant eine ermittelte Seite 211 für den aktuellen Kontext der aktuellen Basisseite 233 ist. Anhand des Relevanzmaßes kann eine Rangfolge der Vielzahl von ermittelten Seiten 211 (in Bezug auf den Kontext) erstellt werden. Beispielsweise kann so eine begrenzte Zahl von ermittelten Seiten 211 (z.B. drei Seiten) unter Berücksichtigung des Relevanzmaßes ausgewählt werden (z.B. die Seiten 211 mit dem höchsten Relevanzmaß für die aktuelle Basisseite 233).

Für die ausgewählten ein oder mehreren Seiten 211 kann dann jeweils ein Toast 321 erstellt werden. Zu diesem Zweck können nach einem vordefinierten Verfahren ein oder mehrere Komponenten einer ausgewählten Seite 211 (z.B. ein Hintergrundbild und/oder eine Überschrift 311) verwendet werden, um in automatischer Weise ein Toast 321 für eine ausgewählte Seite 211 zu erstellen. Dies hat den Vorteil, dass die Toasts 321 nicht im Vorfeld erstellt, ggf. gepflegt und gespeichert werden müssen.

Die Toasts 321 der ein oder mehreren ausgewählten Seiten 211 werden in den Toastbereich 320 der bildlichen Darstellung 300 der aktuellen Basisseite 233 aufgenommen. Somit erhält der Nutzer über die bildliche Darstellung 300 einen schnellen Überblick darüber, welche ein oder mehreren weiteren Seiten 211 des Bedienprogramms 200 in Bezug auf die aktuell dargestellte Basisseite 233 des Bedienprogramms 200 relevant sein könnten. Der Nutzer erhält über die in einem Toast 321 dargestellte zusammenfassende Information einen Überblick darüber, welche Informationen / Aktionen über die mit dem Toast 321 assoziierten Seite 211 des Bedienprogramms 200 zugänglich gemacht werden. Desweiteren kann der Benutzer durch Auswahl eines Toasts 321 (z.B. durch "Anklicken") direkt die mit dem Toast 321 assoziierte Seite 211 des Bedienprogramms 200 aufrufen, ohne dazu die gesamte Menüstruktur des Bedienprogramms 200 (siehe Fig. 2) durchlaufen zu müssen.

Wie bereits oben dargelegt, kann ergänzend oder alternativ zu dem aktuellen Kontext, ein aktueller Status der über das Bedienprogramm 200 betriebenen Hausgeräte 103 und/oder ein ermitteltes Nutzungsverhalten eines Nutzers der Hausgeräte 103 dazu verwendet werden, einen anzuzeigenden Toast 321 zu ermitteln. Mit anderen Worten, es können aktuelle Informationen und historische Informationen bzgl. der ein oder mehreren Hausgeräte 103 bei der Auswahl eines Toasts 321 berücksichtigt werden. Insbesondere können auf Basis des aktuellen Status eines Hausgeräts 103 und/oder auf Basis eines Nutzungsprofils des Hausgeräts 103 und/oder auf Basis eines Nutzungsprofils des Bedienprogramms 200 Dienstleistungen und/oder Zubehörartikel ermittelt werden, die für den Nutzer des Hausgeräts 103 relevant sein können. Diese Dienstleistungen und/oder Zubehörartikel (z.B. Seiten 211 des Bedienprogramms 200, welche sich mit diesen Dienstleistungen und/oder Zubehörartikeln befassen) können dann dem Nutzer in der bildlichen Darstellung 300 (z.B. innerhalb eines Toasts 321) dargestellt werden.

Fig. 4 zeigt ein Flussdiagramm eines beispielhaften Verfahrens 400 zur Bedienung von ein oder mehreren Hausgeräten 103 mittels eines elektronischen Geräts 101. Die Hausgeräte 103 können z.B. einen Ofen, eine Spülmaschine, eine Waschmaschine, einen Trockner, etc. umfassen. Das elektronische Gerät 101 kann ein Smartphone, ein Tablet PC, einen Laptop PC, etc. umfassen. Das elektronische Gerät 101 ist mit den ein oder mehreren Hausgeräten 103 über ein Kommunikations-Netzwerk 102 (z.B. über ein drahtloses Netzwerk wie WLAN, UMTS, LTE) verbunden.

Das Verfahren 400 kann optional das Ermitteln 401 von aktuellen Informationen bzgl. der ein oder mehreren Hausgeräte 103 umfassen. Insbesondere können aktuelle Informationen bzgl. eines Hausgeräts 103 ermittelt werden, welches zu einem aktuellen Zeitpunkt anhand des elektronischen Geräts 101 bedient wird. Die aktuellen Informationen können insbesondere Informationen bzgl. eines aktuellen Zustands des Hausgeräts 103 und/oder bzgl. eines aktuellen Zustands des elektronischen Geräts 101 zu dem aktuellen Zeitpunkt umfassen. Beispielsweise können die aktuellen Informationen einen aktuellen Status des Hausgeräts 103 umfassen, wobei der aktuelle Status über das Netzwerk 102 an das elektronische Gerät 101 und/oder an ein von dem elektronischen Gerät 101 ausgeführtes Bedienprogramm 200 kommuniziert werden kann. Der aktuelle Status eines Hausgeräts 103 kann z.B. ein Programm umfassen, welches zu dem aktuellen Zeitpunkt von dem Hausgerät 103 ausgeführt wird. Alternativ oder ergänzend können die aktuellen Informationen einen aktuellen Kontext des Bedienprogramms 200 für das Hausgerät 103 umfassen, welches anhand des elektronischen Geräts 101 zur Bedienung des Hausgeräts 103 ausgeführt wird. Dabei kann der aktuelle Kontext des Bedienprogramms 200 insbesondere auf Basis einer zu dem aktuellen Zeitpunkt ausgegebenen Seite 233 des Bedienprogramms 200 ermittelt werden.

Das Verfahren 400 umfasst das Ermitteln 402 von historischen Informationen bzgl. des Hausgeräts 103. Dabei können die historischen Informationen Informationen bzgl. einer Nutzung des Hausgeräts 103, einer Nutzung des elektronischen Geräts 101 und/oder einer Nutzung von vergleichbaren Hausgeräten 103 umfassen, wobei die Nutzung zeitlich vor dem aktuellen Zeitpunkt liegt. Insbesondere können Nutzungen über einen bestimmten Zeitraum vor dem aktuellen Zeitpunkt betrachtet und ggf. statistisch ausgewertet werden, um Nutzungsprofile zu erstellen. Die historischen Informationen können so z.B. ein Nutzungsprofil des Hausgeräts 103 umfassen. Dabei kann das Nutzungsprofil des Hausgeräts 103 Informationen darüber umfassen, wie das Hausgerät 103 vor einem aktuellen Zeitpunkt durch direkte Bedienung an dem Hausgerät 103 und/oder durch Bedienung mittels des elektronischen Geräts 101 genutzt wurde. Dies wird dadurch ermöglicht, dass Statusinformationen bzgl. des Status des Hausgeräts 103 über das Netzwerk 102 an dem elektronischen Gerät 101 (und/oder an dem Bedienprogramm 200) bereitgestellt und somit über einen vorbestimmten Zeitraum ausgewertet werden können.

Alternativ oder ergänzend können die historischen Informationen ein Nutzungsprofil des elektronischen Geräts 101 und/oder des Bedienprogramms 200 umfassen. Das Nutzungsprofil des elektronischen Geräts 101 und/oder des Bedienprogramms 200 kann insbesondere ein Nutzungsprofil in Bezug auf ein bestimmtes Hausgerät 103 umfassen. Dabei kann das Nutzungsprofil des elektronischen Geräts 101 bzw. des Bedienprogramms 200 Informationen darüber umfassen, welche Seiten 211, 233 des Bedienprogramms 200 in einem bestimmten Zeitraum vor dem aktuellen Zeitpunkt anhand des Ausgabemittels 104 des elektronischen Geräts 101 ausgegeben wurden. Beispielsweise kann ausgewertet werden, welche Informationen bzgl. des Hausgeräts 103 über das Bedienprogramm 200 von einem Nutzer abgerufen wurden und/oder welches Funktion des Hausgeräts 103 bedient wurden. Desweiteren kann auch ausgewertet werden, welche Informationsseiten (z.B. Rezepte, Bedienungsanleitungen, etc.) betrachtet wurden.

Alternativ oder ergänzend können die historischen Informationen ein Verhaltensprofil von Nutzern von anderen Hausgeräten 103 umfassen, die mit dem Hausgerät 103 vergleichbarer sind (die z.B. den gleichen Typ aufweisen). Beispielsweise kann das Verhaltensprofil Informationen darüber umfassen, welche Zubehörartikel und/oder Dienstleistungen andere Nutzer eines Hausgeräts 103 vom gleichen Typ wie das aktuelle betrachtete Hausgerät 103 in einem Zeitraum vor dem aktuellen Zeitpunkt in Erwägung gezogen haben. Das Verhaltensprofil kann auf der Speichereinheit 111 eines zentralen Rechners 110 bereitgestellt werden.

Das Verfahren 400 umfasst weiter das Bestimmen 403 von einem Zubehörartikel und/oder von einer Dienstleistung bzgl. des Hausgeräts 103 auf Basis der historischen Informationen und ggf. auf Basis der aktuellen Informationen. Desweiteren umfasst das Verfahren 400 das Ausgeben 404 von Informationen bzgl. des Zubehörartikels und/oder der Dienstleistung anhand eines Ausgabemittels 104 des elektronischen Geräts 101.

Insbesondere kann das Ausgabemittel 104 einen Bildschirm umfassen, auf dem eine bildliche Darstellung 300 mit den Informationen bzgl. des Zubehörartikels und/oder der Dienstleistung ausgegeben wird. Die Informationen bzgl. des Zubehörartikels und/oder der Dienstleistung können dabei auch Kaufoptionen für den Zubehörartikel und/oder für die Dienstleistung umfassen.

Das Verfahren 400 ermöglicht so eine automatisierte Zuordnung von Zubehörinformationen, Serviceangeboten und/oder Kaufoptionen basierend auf den ein oder mehreren Hausgeräten 103, welche ein Nutzer über das elektronische Gerät 101 steuert. Dabei können aktuelle Informationen berücksichtigt werden, z.B. Informationen darüber, welche ein oder mehreren Hausgeräte 103 gesteuert werden, welche Ausbaustufe die Hausgeräte 103 aufweisen, welchen aktuellen Status die Hausgeräte 103 aufweisen und/oder welche aktuelle Interaktion über das elektronische Gerät 101 erfolgt. Desweiteren können historische Informationen berücksichtigt werden, z.B. Nutzungsprofile der Hausgeräte 103 und/oder ein Nutzungsprofil des elektronischen Geräts 101 / des Bedienprogramms 200. Zudem kann das Verhalten anderer Nutzer mit vergleichbarem Profil und/oder mit vergleichbaren Hausgeräten 103 bei der Bestimmung von Zubehör und/oder Dienstleistungen berücksichtigt werden.

Ein Beispiel für einen passenden Zubehörartikel ist ein Entkalkungsstab, wenn erkannt wird, dass der aktuelle Status des Hausgeräts 103 anzeigt, dass eine Entkalkung aktuell oder in naher Zukunft erforderlich ist. Alternativ oder ergänzend kann eine Gerätewartung als Dienstleistung angeboten werden. In einem weiteren Beispiel kann als Zubehörartikel ein Pizzastein oder ein Pizzamesser bestimmt werden, wenn sich aus dem Nutzungsprofil der ein oder mehreren Hausgeräte 103 ergibt, dass eine regelmäßige Nutzung des Programms "Pizza backen" erfolgt ist. Außerdem können auf Basis eines Nutzungsprofils des elektronischen Geräts 101 / Bedienprogramms 200, welches anzeigt, dass häufig bestimmte Rezepte und Kochtipps aufgerufen werden, als Zubehörartikel ein passender Teleskopauszug oder eine Auflaufform bestimmt werden, bzw. als Dienstleistung ein bestimmter Kochkurs bestimmt werden. Desweiteren können bei einer aktuellen Interaktion an dem elektronischen Gerät 101, die auf das Aufrufen des Service Tipps "Wie entkalke ich mein Hausgerät?" gerichtet ist, als Zubehörartikel Entkalkungstabs und als Dienstleistung eine Gerätewartung bestimmt werden. Außerdem kann aus dem Verhalten anderer Nutzer (z.B. Kunden mit ähnlichem Profil kauften häufig den Pizzastein) als möglicher Zubehörartikel ein Pizzastein bestimmt werden.

Das Verfahren 400 ermöglicht eine effiziente Bedienung und einen effizienten Betrieb eines Hausgeräts 103. Insbesondere kann durch das Verfahren 400 der Mehrwert eines Hausgeräts 103 für einen Nutzer erhöht werden. Dies wird dadurch erreicht, dass der Nutzer individualisiert und bedarfsgerecht über Zubehör und Dienstleistungen bzgl. des Hausgeräts 103 informiert wird. Dabei kann zur Individualisierung sowohl das Nutzungsprofil des elektronischen Geräts 101 bzw. des Bedienprogramms 200, wie auch das Nutzungsprofil der ein oder mehreren Hausgeräte 103 herangezogen werden. Der Nutzer kann somit automatisiert Vorschläge zu passenden Zubehörartikeln und Dienstleistungen erhalten, wodurch eine Erhöhung des Nutzens der Hausgeräte 103 erreicht werden kann.

Die aktuellen Informationen und die historischen Informationen können dabei kombiniert und/oder gewichtet werden, um möglichst relevante Zubehörartikel und/oder Dienstleistungen zu bestimmen. Insbesondere können eine Vielzahl von Kandidaten für Zubehörartikel und/oder Dienstleistungen in Abhängigkeit von den aktuellen Informationen und den historischen Informationen ermittelt werden. Insbesondere können entsprechende Kandidatenseiten 211 aus dem Bedienprogramm 200 ermittelt werden. Desweiteren kann eine Relevanz der jeweiligen Kandidaten / Kandidatenseiten ermittelt werden. Außerdem kann der Kandidat / die Kandidatenseite mit der höchsten Relevanz für die Ausgabe bestimmt werden. So kann eine verbesserte Auswahl des ermittelten Zubehörartikels bzw. der ermittelten Dienstleistung gewährleistet werden.

Das Verfahren 400 kann weiter umfassen, das Bereitstellen eines Bedienprogramms 200 für das Hausgerät 103. Dabei kann das Bedienprogramm 200 eine Vielzahl von Seiten 211, 233 umfassen. Die Seiten 211, 233 können über einen Web-Browser auf dem elektronischen Gerät 101 dargestellt werden. Alternativ kann eine Software-Applikation (z.B. eine sogenannte App) auf dem elektronischen Gerät 101 bereitgestellt werden, um die Seiten 211, 233 auf dem elektronischen Gerät 101 auszugeben. Über die unterschiedlichen Seiten 211, 233 können unterschiedliche Themenbereiche mit Bezug auf die ein oder mehreren Hausgeräte 103 adressiert werden. Beispielhafte Themenbereich sind Themen, die ein Hausgerät 103 und dessen Betrieb betreffen (z.B. Bedienung eines Hausgeräts 103, Status/Fehlerinformationen eines Hausgeräts 103), Themen, die die Verwendung eines Hausgeräts 103 betreffen (z.B. Rezepte zum Kochen oder Backen), und/oder Themen, die Dienstleistungen / Zubehörartikel in Bezug auf ein Hausgerät 103 betreffen (z.B. eine Service-Hotline, ein Wartungsdienst, ein Benutzerforum, die Beschaffung von Ersatzteilen).

Die Vielzahl von Seiten 211, 233 kann hierarchisch und/oder in einer Menüstruktur bzw. Baumstruktur angeordnet sein. Insbesondere kann die Vielzahl von Seiten 211, 233 gemäß der vordefinierten Vielzahl von Themenbereichen angeordnet sein. Ein derartiger Aufbau der Seiten 211, 233 des Bedienprogramms kann dazu führen, dass ausgehend von einer ersten Seite 233 (z.B. in einem ersten Themenbereich) eine ggf. relevante zweite Seite 211 (z.B. in einem zweiten Themenbereich, der von dem ersten Themenbereich unterschiedlich ist) nicht oder nur in sehr aufwändiger Weise von einem Nutzer des Bedienprogramms 200 aufgefunden und aufgerufen werden kann. Insbesondere kann es für einen Nutzer aufwändig sein, ausgehend von einer ersten Seite 233, welche sich auf den Betrieb eines Hausgeräts 103 bezieht, eine relevante zweite Seite 211 zu ermitteln, welche sich z.B. mit relevanten Zubehörartikeln und/oder Dienstleistungen befasst.

Das Verfahren 400 kann das Ausgeben einer ersten Seite 233 der Vielzahl von Seiten 211, 233 anhand des Ausgabemittels 104 (z.B. anhand eines Bildschirms) des elektronischen Geräts 101 umfassen. Die erste Seite 233 kann z.B. als ein Teil einer bildlichen Darstellung 300 (z.B. auf dem Bildschirm des elektronischen Geräts 101) ausgegeben werden. Desweiteren kann das Verfahren 400 das Bestimmen einer zweiten Seite 211 der Vielzahl von Seiten 211, 233 umfassen, wobei die zweite Seite 211 Informationen bzgl. des bestimmten Zubehörartikels und/oder der bestimmten Dienstleistung umfassen kann. Die zweite Seite 211 kann auf Basis der aktuellen Informationen und/oder auf Basis der historischen Informationen ermittelt werden.

Außerdem kann das Verfahren 400 das Ermitteln eines Interaktionselements 321 (in diesem Dokument auch als "Toast" bezeichnet) umfassen, wobei das Interaktionselement 321 eine Verknüpfung zu der zweiten Seite 211 umfasst. Das Interaktionselement 321 kann dann anhand des Ausgabemittels 104 in Zusammenhang mit der ausgegebenen ersten Seite 233 (z.B. als ein weiterer Teil der bildlichen Darstellung 300) ausgegeben werden. Durch das Interaktionselement 321 kann ein Nutzer auf eine weitere (zweite) Seite 211 des Bedienprogramms 200 hingewiesen werden, die Informationen bzgl. eines Zubehörartikels und/oder bzgl. einer Dienstleistung umfasst, die für den Nutzer im Hinblick auf die aktuellen Informationen und die historischen Informationen relevant sind. Der Nutzer kann somit auch ohne Kenntnis der Menüstruktur des Bedienprogramms 200 in effizienter Weise auf andere relevante Seiten 211 des Bedienprogramms 233 zugreifen (z.B. durch Anklicken des Interaktionselements 321 und der damit verbundenen Aktivierung der Verknüpfung). So kann die Bedienung und der Betrieb der ein oder mehreren Hausgeräte 103 vereinfacht und verbessert werden.

Durch die Verknüpfung mit der zweiten Seite 211 kann das Interaktionselement 321 dazu verwendet werden (z.B. durch Anklicken), die zweite Seite 211 des Bedienprogramms 200 zu aktivieren. Die zweite Seite 211 des Bedienprogramms 200 kann dann an die Stelle der ersten Seite 233 in der bildlichen Darstellung 300 treten. Für die zweite Seite 211 können dann wiederum ein oder mehrere Interaktionselemente 321 für weitere Seiten des Bedienprogramms 200 ermittelt und angezeigt werden. So können für jede der Vielzahl von Seiten 211, 233 Interaktionselemente 321 mit Verknüpfungen zu anderen Seiten des Bedienprogramms 200 ausgegeben werden, die relevante Informationen über Zubehörartikel und/oder Dienstleistungen umfassen.

Die erste Seite 233 kann in einem Basisbereich 310 der bildlichen Darstellung 300 ausgegeben werden und das Interaktionselement 321 kann in einem kontextabhängigen Bereich 320 der bildlichen Darstellung 300 ausgegeben werden. Dabei können der Basisbereich 310 und der kontextabhängige Bereich 320 für die Darstellung von unterschiedlichen Seiten der Vielzahl von Seiten 211, 233 örtlich fixiert sein. Mit anderen Worten, für den Basisbereich 310 und den kontextabhängigen Bereich 320 können bestimmte Bereiche der bildlichen Darstellung reserviert sein. Dies ermöglicht es einem Nutzer, in einfacher Weise die eigentliche Seite des Bedienprogramms (d.h. die erste Seite 233) von dem Verweis auf mglw. relevante andere Seiten 211 (d.h. von dem Interaktionselement 321) zu unterscheiden.

Der Basisbereich 310 und der kontextabhängige Bereich 320 können gleichzeitig in der bildlichen Darstellung 300 ausgegeben werden. Insbesondere können der Basisbereich 310 und der kontextabhängige Bereich 320 nebeneinander in der bildlichen Darstellung ausgegeben werden. Eine gleichzeitige vollständige Darstellung des Basisbereichs 310 und des kontextabhängigen Bereichs 320 ist z.B. möglich, wenn das elektronische Gerät 101 einen ausreichend großen Bildschirm umfasst. Alternativ oder ergänzend kann in Reaktion auf eine Eingabe auf dem elektronischen Gerät 101 (z.B. in Reaktion auf eine Wischbewegung auf einem berührempflindlichen Bildschirm) der kontextabhängige Bereich 320 aus der bildlichen Darstellung 300 entfernt werden (und ggf. wieder durch eine weitere Eingabe in die bildliche Darstellung 300 aufgenommen werden). Dies kann insbesondere für elektronische Geräte 101 mit einem relativ kleinen Bildschirm von Vorteil sein, um die Ausgabe der ersten Seite 233 im Basisbereich nicht zu beeinträchtigen.

Das Interaktionselement 321 weist typischerweise eine bildliche Fläche auf. Im Rahmen der Ermittlung eines Interaktionselements 321 können ein oder mehrere Komponenten aus der zweiten Seite 211 extrahiert werden (z.B. eine Überschrift und/oder ein Hintergrundbild). Die bildliche Fläche des Interaktionselements 321 kann dann auf Basis der extrahierten ein oder mehreren Komponenten der zweiten Seite 211 ermittelt bzw. erstellt werden. Das Interaktionselement 321 einer Seite des Bedienprogramms 200 kann somit "on the fly" erstellt werden und muss nicht auf einer Speichereinheit des elektronischen Geräts 101 oder auf einem externen Rechner 110 abgespeichert werden. Dadurch kann der erforderliche Speicherplatz für das Bedienprogramm 200 reduziert werden. Außerdem ergibt sich so eine erhöhte Flexibilität in Bezug auf die Darstellung des Interaktionselements 321 (d.h. auf den Inhalt der bildlichen Fläche). Beispielsweise können die ein oder mehreren extrahierten Komponenten von dem bestimmten Zubehörartikel und/oder der bestimmten Dienstleistung abhängen. Mit anderen Worten, der Inhalt der bildlichen Fläche des Interaktionselements 321 kann von dem bestimmten Zubehörartikel und/oder der bestimmten Dienstleistung abhängen. So kann die Relevanz der mit dem Interaktionselement 321 assoziierten zweiten Seite 211 für einen Nutzer eindeutiger hervorgehoben werden.

Die vorliegende Erfindung ist nicht auf die gezeigten Ausführungsbeispiele beschränkt.

### Bezugszeichenliste

- 101: elektronisches Gerät
- 102: (ggf. drahtloses) Netzwerk
- 103: Hausgerät
- 104: Ausgabemittel des elektronischen Geräts 101
- 105: Eingabemittel des elektronischen Geräts 101
- 110: externer Rechner
- 111: Speichereinheit des Rechners 110
- 200: Bedienprogramm
- 201, 211, 212, 213, 221, 222, 223, 231, 232, 233: Seiten des Bedienprogramms 200
- 300: bildliche Darstellung einer Seite des Bedienprogramms 200
- 310: Basisbereich der bildlichen Darstellung 300
- 311: Überschrift einer Seite des Bedienprogramms 200
- 312: Menüleiste einer Seite des Bedienprogramms 200
- 313: Informationsbereich einer Seite des Bedienprogramms 200
- 314: Steuerelemente einer Seite des Bedienprogramms 200
- 320: kontextabhängiger Bereich der bildlichen Darstellung 300
- 321: kontextabhängiges Interaktionselement
- 330: Menübereich der bildlichen Darstellung 300
- 400: Verfahren zur Bedienung eines Hausgeräts 103
- 401, 402, 403, 404: Schritte des Verfahrens 400

## Patentansprüche

1. Verfahren (400) zur Bedienung eines Hausgeräts (103) durch ein elektronisches Gerät (101), das über ein Netzwerk (102) mit dem Hausgerät (103) verbunden ist; wobei das Verfahren (400) umfasst:
a. Bereitstellen eines Bedienprogramms (200) für das Hausgerät (103) auf dem elektronischen Gerät (101); wobei das Bedienprogramm (200) eine Vielzahl von Seiten (211, 233) umfasst;
b. Ausgeben einer ersten Seite (233) der Vielzahl von Seiten (211, 233) auf einem Ausgabemittel (104) des elektronischen Geräts (101); und
c. Ermitteln (402) von historischen Informationen bzgl. des Hausgeräts (103), die Informationen bzgl. einer Nutzung des Hausgeräts (103), einer Nutzung des elektronischen Geräts (101) und/oder einer Nutzung von vergleichbaren Hausgeräten (103) umfassen, wobei die Nutzung zeitlich vor einem aktuellen Zeitpunkt liegt;
**dadurch gekennzeichnet, dass**
die Vielzahl von Seiten (211, 233) hierarchisch in einer Menüstruktur angeordnet ist, die historischen Informationen ein Verhaltensprofil von Nutzern von anderen Hausgeräten (103), die mit dem Hausgerät (103) vergleichbarer sind, umfasst und das Verfahren die folgenden Schritte umfasst
d. Bestimmen (403) von einem Zubehörartikel bzgl. des Hausgeräts (103) auf Basis der historischen Informationen;
e. Bestimmen einer zweiten Seite (211) der Vielzahl von Seiten (211, 233), wobei die zweite Seite (211) Informationen bzgl. des Zubehörartikels umfasst;
f. Ermitteln eines Interaktionselements (321), wobei das Interaktionselement eine Verknüpfung zu der zweiten Seite (211) umfasst; und
g. Ausgeben (404) von Informationen bzgl. des Zubehörartikels auf dem Ausgabemittel (104) des elektronischen Geräts (101) durch Ausgeben des Interaktionselements (321) auf dem Ausgabemittel (104) in Zusammenhang mit der ausgegebenen ersten Seite (233).

2. Verfahren (400) gemäß dem vorhergehenden Anspruch, wobei die historischen Informationen
a. ein Nutzungsprofil des Hausgeräts (103) und/oder
b. ein Nutzungsprofil des elektronischen Geräts (101)
umfassen.

3. Verfahren (400) gemäß Anspruch 2, wobei das Nutzungsprofil des Hausgeräts (103) Informationen darüber umfasst, wie das Hausgerät (103) vor einem aktuellen Zeitpunkt durch direkte Bedienung an dem Hausgerät (103) und/oder durch Bedienung mittels des elektronischen Geräts (101) genutzt wurde.

4. Verfahren (400) gemäß einem der vorhergehenden Ansprüche, wobei
a. das Verfahren (400) weiter umfasst, Ermitteln (401) von aktuellen Informationen bzgl. des Hausgeräts (103); und
b. der Zubehörartikel bzgl. des Hausgeräts (103) auch auf Basis der aktuellen Informationen bestimmt werden.

5. Verfahren (400) gemäß Anspruch 4, wobei die aktuellen Informationen Informationen bzgl. eines Zustands des Hausgeräts (103) und/oder des elektronischen Geräts (101) zu einem aktuellen Zeitpunkt umfassen.

6. Verfahren (400) gemäß einem der Ansprüche 4 bis 5, wobei die aktuellen Informationen ein oder mehrere umfassen von,
a. einen aktuellen Status des Hausgeräts (103); und/oder
b. einen aktuellen Kontext eines Bedienprogramms (200) für das Hausgerät (103), welches anhand des elektronischen Geräts (101) zur Bedienung des Hausgeräts (103) ausgeführt wird.

7. Verfahren (400) gemäß Anspruch 6, wobei der aktuelle Status des Hausgeräts (103) über das Netzwerk (102) an das elektronische Gerät (101) übermittelt wird.

8. Verfahren (400) gemäß Anspruch 6, wobei der aktuelle Kontext des Bedienprogramms (200) auf Basis der ausgegebenen ersten Seite (233) ermittelt wird.

9. Verfahren (400) gemäß Anspruch 8 mit Rückbezug auf Anspruch 2, wobei das Nutzungsprofil des elektronischen Geräts (101) Informationen darüber umfasst, welche Seiten (211, 233) des Bedienprogramms (200) vor einem aktuellen Zeitpunkt anhand des Ausgabemittels (104) des elektronischen Geräts (101) ausgegeben wurden.

10. Verfahren (400) gemäß einem der vorhergehenden Ansprüche, wobei
a. das Interaktionselement (321) eine bildliche Fläche umfasst;
b. das Ermitteln des Interaktionselements (321) umfasst,
i. Extrahieren von ein oder mehreren Komponenten aus der zweiten Seite (211); und
ii. Erstellen der bildlichen Fläche des Interaktionselements (321) auf Basis der extrahierten ein oder mehreren Komponenten der zweiten Seite (211).

11. Verfahren (400) gemäß Anspruch 10, wobei die ein oder mehreren extrahierten Komponenten Informationen bzgl. des Zubehörartikels und/oder einer Dienstleistung umfassen.

12. Verfahren (400) gemäß einem der vorhergehenden Ansprüche, wobei das Bestimmen der zweiten Seite (211) umfasst,
a. Ermitteln von mehreren Kandidatenseiten aus der Vielzahl von Seiten (211, 233) in Abhängigkeit von den aktuellen Informationen und den historischen Informationen;
b. Ermitteln einer Relevanz von jeder der mehreren Kandidatenseiten; und
c. Bestimmen der zweiten Seite (211) als die Kandidatenseite mit der höchsten Relevanz.

## Claims

1. Method (400) for operating a household appliance (103) by means of an electronic device (101) which is connected to the household appliance (103) via a network (102); wherein the method (400) comprises:
a. providing an operating program (200) for the household appliance (103) on the electronic device (101); wherein the operating program (200) comprises a plurality of pages (211, 233);
b. outputting a first page (233) of the plurality of pages (211, 233) on an output means (104) of the electronic device (101); and
c. determining (402) historical information relating to the household appliance (103), which comprises information relating to a use of the household appliance (103), a use of the electronic device (101) and/or a use of comparable household appliances (103), wherein the use occurs at a time prior to a current time;
**characterised in that**
the plurality of pages (211, 233) is hierarchically arranged in a menu structure, the historical information comprises a behavioural profile of users of other household appliances (103) that are more comparable to the household appliance (103), and the method comprises the following steps
d. determining (403) an accessory article relating to the household appliance (103) on the basis of the historical information;
e. determining a second page (211) of the plurality of pages (211, 233), wherein the second page (211) comprises information relating to the accessory article;
f. determining an interaction element (321), wherein the interaction element comprises a link to the second page (211); and
g. outputting (404) information relating to the accessory article on the output means (104) of the electronic device (101) by outputting the interaction element (321) on the output means (104) in conjunction with the output first page (233).

2. Method (400) according to the preceding claim, wherein the historical information comprises
a. a usage profile of the household appliance (103) and/or
b. a usage profile of the electronic device (101).

3. Method (400) according to claim 2, wherein the usage profile of the household appliance (103) comprises information about how the household appliance (103) was used before a current time by direct operation on the household appliance (103) and/or by operation by means of the electronic device (101).

4. Method (400) according to one of the preceding claims, wherein
a. the method (400) further comprises determining (401) current information relating to the household appliance (103); and
b. the accessory article relating to the household appliance (103) is also determined on the basis of the current information.

5. Method (400) according to claim 4, wherein the current information comprises information relating to a state of the household appliance (103) and/or of the electronic device (101) at a current time.

6. Method (400) according to one of claims 4 to 5, wherein the current information comprises one or more of,
a. a current status of the household appliance (103); and/or
b. a current context of an operating program (200) for the household appliance (103), which is executed on the basis of the electronic device (101) for operating the household appliance (103).

7. Method (400) according to claim 6, wherein the current status of the household appliance (103) is transmitted to the electronic device (101) via the network (102).

8. Method (400) according to claim 6, wherein the current context of the operating program (200) is determined on the basis of the output first page (233).

9. Method (400) according to claim 8 with reference back to claim 2, wherein the usage profile of the electronic device (101) comprises information about which pages (211, 233) of the operating program (200) were output before a current time on the basis of the output means (104) of the electronic device (101).

10. Method (400) according to one of the preceding claims, wherein
a. the interaction element (321) comprises a pictorial surface;
b. the determination of the interaction element (321) comprises,
i. extracting one or more components from the second page (211); and
ii. creating the pictorial surface of the interaction element (321) on the basis of the extracted one or more components of the second page (211).

11. Method (400) according to claim 10, wherein the one or more extracted components comprise information relating to the accessory article and/or a service.

12. Method (400) according to one of the preceding claims, wherein the determination of the second page (211) comprises,
a. determining multiple candidate pages from the plurality of pages (211, 233) as a function of the current information and the historical information;
b. determining a relevance of each of the multiple candidate pages; and
c. determining the second page (211) as the candidate page with the highest relevance.

## Revendications

1. Procédé (400) de commande d'un appareil ménager (103) au moyen d'un appareil électronique (101) qui est relié à l'appareil ménager (103) par l'intermédiaire d'un réseau (102), le procédé (400) comprenant :
a. mise à disposition sur l'appareil électronique (101) d'un programme de commande (200) pour l'appareil ménager (103), le programme de commande (200) comprenant une pluralité de pages (211, 233) ;
b. sortie d'une première page (233) de la pluralité de pages (211, 233) sur un moyen de sortie (104) de l'appareil électronique (101) ; et
c. détermination (402) d'informations historiques concernant l'appareil ménager (103), lesquelles comprennent des informations relatives à une utilisation de l'appareil ménager (103), à une utilisation de l'appareil électronique (101) et/ou à une utilisation d'appareils ménagers (103) comparables, l'utilisation étant temporellement située avant un moment actuel ;
**caractérisé en ce que**
la pluralité de pages (211, 233) est hiérarchiquement disposée dans une structure de menus, **en ce que** les informations historiques comprennent un profil de comportement d'utilisateurs d'autres appareils ménagers (103) qui sont comparables à l'appareil ménager (103), et **en ce que** le procédé comprend les étapes suivantes
d. détermination (403) d'un accessoire concernant l'appareil ménager (103) sur la base des informations historiques ;
e. détermination d'une deuxième page (211) de la pluralité de pages (211, 233), la deuxième page (211) comprenant des informations relatives à l'accessoire ;
f. détermination d'un élément d'interaction (321), l'élément d'interaction comprenant un lien vers la deuxième page (211) ; et
g. sortie (404) sur le moyen de sortie (104) de l'appareil électronique (101) des informations relatives à l'accessoire, par sortie de l'élément d'interaction (321) sur le moyen de sortie (104) en relation avec la première page (233) sortie.

2. Procédé (400) selon la revendication précédente, les informations historiques comprenant
a. un profil d'utilisation de l'appareil ménager (103) et/ou
b. un profil d'utilisation de l'appareil électronique (101).

3. Procédé (400) selon la revendication 2, le profil d'utilisation de l'appareil ménager (103) comprenant des informations indiquant comment l'appareil ménager (103), avant un moment actuel, a été utilisé par commande directe sur l'appareil ménager (103) et/ou par commande au moyen de l'appareil électronique (101).

4. Procédé (400) selon l'une quelconque des revendications précédentes,
a. le procédé (400) comprenant en outre, détermination (401) d'informations actuelles relatives à l'appareil ménager (103) ; et
b. des accessoires relatifs à l'appareil ménager (103) également sur la base des informations actuelles.

5. Procédé (400) selon la revendication 4, les informations actuelles comprenant des informations relatives à un état de l'appareil ménager (103) et/ou de l'appareil électronique (101) à un moment actuel.

6. Procédé (400) selon l'une quelconque des revendications 4 à 5, les informations actuelles comprenant un ou plusieurs
a. d'un état actuel de l'appareil ménager (103) ; et/ou
b. d'un contexte actuel d'un programme de commande (200) pour l'appareil ménager (103), lequel est exécuté pour la commande de l'appareil ménager (103) à l'aide de l'appareil électronique (101).

7. Procédé (400) selon la revendication 6, l'état actuel de l'appareil ménager (103) étant transmis à l'appareil électronique (101) par l'intermédiaire du réseau (102).

8. Procédé (400) selon la revendication 6, le contexte actuel du programme de commande (200) étant déterminé sur la base de la première page (233) sortie.

9. Procédé (400) selon la revendication 8 avec renvoi à la revendication 2, le profil d'utilisation de l'appareil électronique (101) comprenant des informations indiquant quelles pages (211, 233) du programme de commande (200) ont été sorties à l'aide du moyen de sortie (104) de l'appareil électronique (101) avant un moment actuel.

10. Procédé (400) selon l'une quelconque des revendications précédentes,
a. l'élément d'interaction (321) comprenant une surface visuelle ;
b. la détermination de l'élément d'interaction (321) comprenant
i. extraction d'une ou de plusieurs composantes à partir de la deuxième page (211) ; et
ii. établissement de la surface visuelle de l'élément d'interaction (321) sur la base de l'une composante extraite ou des plusieurs composantes extraites de la deuxième page (211).

11. Procédé (400) selon la revendication 10, l'une composante extraite ou les plusieurs composantes extraites comprenant des informations relatives à l'accessoire et/ou à un service.

12. Procédé (400) selon l'une quelconque des revendications précédentes, la détermination de la deuxième page (211) comprenant,
a. détermination de plusieurs pages de candidat à partir de la pluralité de pages (211, 233) en fonction des informations actuelles et des informations historiques ;
b. détermination d'une pertinence de chacune des plusieurs pages de candidat ; et
c. détermination de la deuxième page (211) en tant que page de candidat ayant la pertinence la plus élevée.
